## Europäisches Patentamt

(19) **European Patent Office**

**Office européen des brevets**

(11) Publication number: **0 239 523 B1**

# EUROPEAN PATENT SPECIFICATION

(45) Date of publication of the patent specification: 06.06.90

(51) Int. Cl.⁵: **F02D 1/10, F02D 1/08, F02D 41/38**

(21) Application number: **87630038.5**

(22) Date of filing: **25.03.87**

(54) Preloaded compliant linkage for fuel injection pump rack.

(30) Priority: **26.03.86 US 844059**

(43) Date of publication of application: **30.09.87 Bulletin 87/40**

(45) Publication of the grant of the patent: **06.06.90 Bulletin 90/23**

(84) Designated Contracting States: **DE FR GB IT**

(56) References cited:
**EP-A- 0 069 111**
**FR-A- 2 396 870**
**US-A- 4 570 588**

(73) Proprietor: **AIL CORPORATION, 77 Kilian Road, Columbia South Carolina 29203(US)**

(72) Inventor: **Brisbon, Eric S., 118 Nash Hill Road, Ludlow Massachusetts 01056(US)**
Inventor: **Krosney, Mark, 44 Oakwood Drive, South Windsor Connecticut 06074(US)**

(74) Representative: **Weydert, Robert et al, OFFICE DENNEMEYER S.à.r.l. P.O. Box 1502, L-1015 Luxembourg(LU)**

## Description

The invention relates to fuel injection for internal combustion engines.

In the wake of recent stringent emissions controls and high fuel prices, it has become increasingly important to provide precise control over the combustion process in internal combustion engines. The invention is discussed in the context of diesel engines.

A typical fuel injection pump for a diesel engine comprises a pressurized fuel source, a plunger valve which meters the fuel to each cylinder's fuel injector, a camshaft operating the plungers up and down, and a rack arrangement for rotationally positioning the plungers.

The camshaft is driven in syntony (at the same speed) with an engine fuel pump drive shaft, but at a variable advance angle thereto. The advance angle determines the onset of injection.

The rack is typically moved within a limited range of linear positions to determine a limited range of plunger rotational positions by a throttle control and a flyweight arrangement driven off of the camshaft. The rotational position of the plungers determines the end of fuel metering, and hence the fuel quantity delivered.

A flyweight arrangement involves many moving parts.

US-A 4 502 537 discloses (in Fig. 6) positioning the pump rack with a stepping motor actuator (106), and having a reference stop (230) at the zero throttle position to initialize the stepper motor by causing it to move the pump rack linkage (202) in the direction of the reference stop. Reinitialization is assured at this point by providing as many pulses to the stepper motor as there are in the full stroke of the motor (see column 11, lines 36–50).

US-A 4 570 588 discloses (in Fig. 1) positioning a control rod (2) with a stepping motor (10) through the intermediary of a resiliently yieldable coupling comprising a coupling plate (11) fixed to the output shaft of the stepping motor and driving through coupling pins (12, 12a) and a tension spring (14), a camwheel (7) that urges the control rod. The spring (14) acts as an energy storage device to alleviate the possibility of a phase shift (position error) between the stepping motor and the control rod. This possibility may arise if the control rod load exceeds the stepping motor output.

EP-A 0 069 111 concerns a fuel injection pump according to the precharacterizing portion of independent claim 1 and discloses positioning a control rod (17) with a stepper motor (4) via a pinion gear (5) on the motor moving a toothed rack (6) that is coupled to the control rod via a double-acting resilient linkage that involves a prestressed compression spring (11).

Reference is also made to FR-A 2 396 870 which discloses the interconnection between a control lever (12) and a fuel control rack (1). The interconnection comprises a clevis (2) pivotably connected to the control lever (12) and a connection member (3) pivotably connected to the fuel control rack (1). A preload spring (4) is disposed in a cavity of the connection member (3) and exerts a separating force between the connection member (3) and the clevis (2).

To maintain tooth engagement and to compensate for wear the fuel injection pump according to the invention has the features recited in the characterizing portion of independent claim 1. Precise control of the centerline distance between the pinion and the rack is avoided by the provision of the spring-loaded mechanism urging the teeth of the rack member against the teeth of the pinion gear.

The clevis member may be pivoted to the rack member to allow the rack member to move away from the pinion in the event of a pump rack load of extremely high (tooth-damaging) magnitude (claim 6).

Other advantageous features of the fuel injection pump are recited in the remaining dependent claims.

An embodiment of the fuel injection pump will now be described with reference to the drawings, wherein:

Fig. 1 is a schematic of a prior art fuel injection system.

Fig. 2 is a side view, partially broken away and partially in cross section of the resilient rack linkage for fuel injection of this invention.

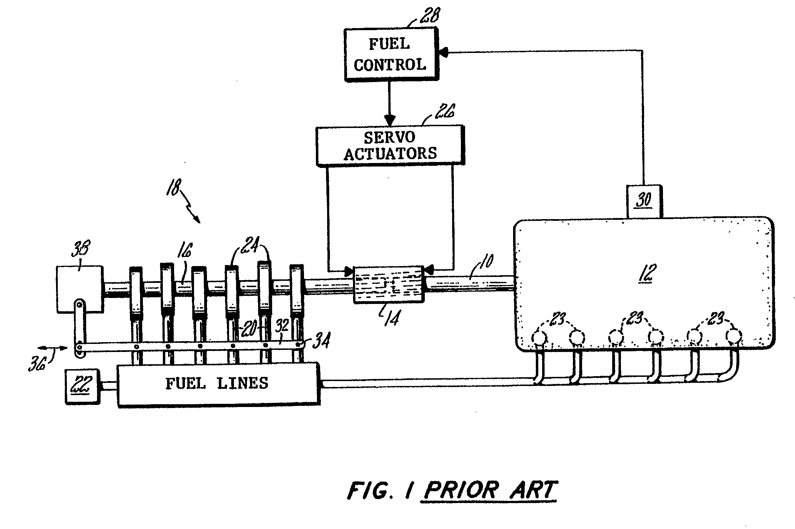

Fig. 1 shows a prior art fuel injection system.

A pump drive shaft 10 is driven by an engine 12.

The pump drive shaft 10 is coupled via a helical-lysplined sleeve 14 to the camshaft 16 of a fuel pump 18. Individual plungers 20 in the fuel pump 18 supply a metered fuel charge from a pressurized fuel source 22 to injectors 23 for the individual cylinders of the engine 12 in response to the urgings of individual lobes 24 on the camshaft 16.

The sleeve 14 is axially positionable by servo actuators 26 to vary the relative angular position (timing) of the camshaft 16 with respect to the pump drive shaft 10, within a limited range of relative angular positions, while driving the camshaft in syntony with the fuel pump drive shaft. The camshaft timing determines the onset of injection.

The servo actuators 26 are responsive to a control signal from a microprocessor-based fuel control 28, which receives as inputs, signals from engine sensors 30 indicative of engine operating parameters such as speed, position, temperature, load and throttle lever setting. A pump rack 32 is disposed tangentially to the plungers 20 and is attached thereto by suitable means 34. The rack 32 is longitudinally positionable, as indicated by the double-ended arrow 36, by an actuator 38. In response to longitudinal motion of the pump rack 32, the plungers 20 are rotated simultaneously about their axes. The plungers 20 are provided with conventional helical slots which cooperate with spill ports, so that the angular position of the plungers about their axes determines the end of the injection event, and hence the quantity of fuel which is injected.

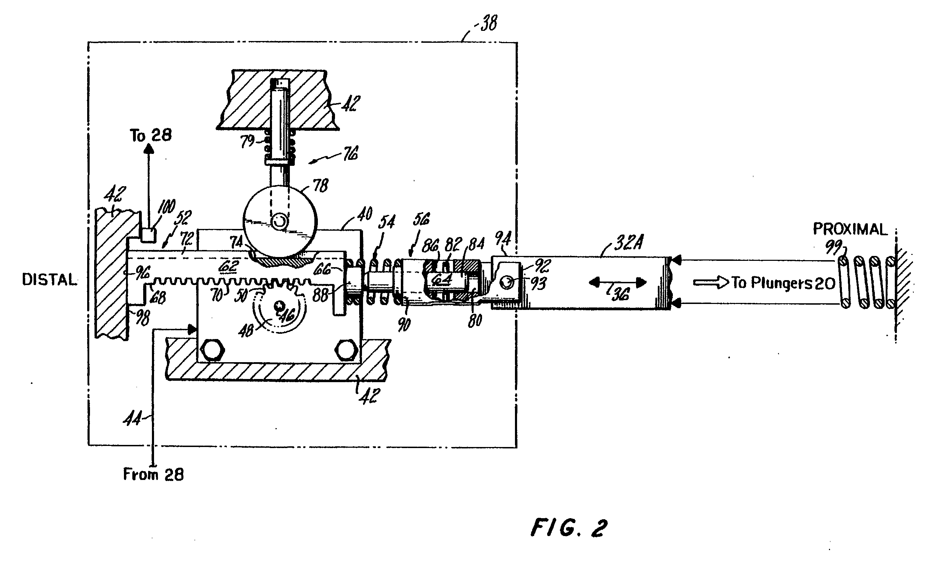

Fig. 2 shows the mechanism of this invention within the phantom lines 38 (corresponding to element 38 of Fig. 1) for linearly actuating a fuel injection pump rack 32A (similar to the rack 32 of Fig. 1).

An electromechanical actuator, such as a fine angle stepper motor 40, is mounted in a housing 42 and is responsive to a desired pump rack position signal on a line 44 from the electronic fuel control 28 for open-loop operation. The output shaft 46 of the motor 40 carries a pinion gear 48 having teeth 50.

A preloaded, compliant linkage comprising a rack member 52, a spring 54, and a clevis member 56 is disposed in-line with the pump rack 32A, between the pinion gear 48 and the pump rack 32A, to position the pump rack 32A linearly (as indicated by the arrows 36) in response to the rotational position of the pinion gear 48 which is dictated by the controller.

With regard to Fig. 2, the term "proximal" refers to those elements or portions of elements disposed towards the pump rack 32A, and the term "distal" refers to those elements or portions of elements disposed away from the pump rack.

## COMPLIANT LINKAGE

The rack member 52 has two portions; a longitudinal rectangular portion 62, and a rod portion 64 extending longitudinally from the proximal end 66 of the rectangular portion 62 toward the pump rack 32A. One side 68 of the rectangular portion 62 has teeth 70 that mesh with the pinion gear teeth 50, and the opposite side 72 is provided with a longitudinal groove 74.

A spring-loaded mechanism 76 is disposed in the housing 42 transverse to the rack member 52, and has a wheel 78 that rides in the groove 74. The wheel 78 is urged against the rack member 52, towards the pinion 48 by a spring 79. Zero backlash of the rack and the pinion is achieved by the profile of the teeth 50 and 70, and by the force of the spring 79 which loads the rack radially toward the pinion gear 48.

The proximal end 92 of the clevis member 56 is transversely (parallel to the output shaft 46) pinned by a pin 93 to the distal end 94 of the pump rack 32 so that the rack member 52 can pivot towards the pinion gear 48, thereby insuring maximum engagement of the teeth 50, 70 in response to the urgings of the spring-loaded mechanism 76. The spring force of this mechanism 76 is determined by, and is a function of, the maximum force exerted by the pinion gear teeth 50 in meeting a mechanism load. The load is a force directed along the involute path of the teeth, which has a radial component that must be overcome by the spring in order for the teeth to remain in contact. The rack teeth 50 load both sides of one or more pinion teeth 70. The spring force will also compensate for wear with zero backlash. The design objective for the profile of the teeth 50 and 70 is to minimize backlash and sliding contact, and to maximize rolling contact.

By reason of the spring force, as the compliant linkage load increases to approach a maximum as defined by the spring 54, the driving side load of the pinion teeth approaches maximum while the backside tooth load approaches zero. Hence, the efficiency of the drive mechanism (i.e., tooth meshing) increases as the load increases.

For conditions of malfunction, such as load seizure when the motor 40 might be unable to put out limit torque, and exceed the capability of the spring 79, the spring stroke is limited by a disengagement stop so as to permit the rack teeth 70 to ride up on the pinion teeth 50, without permitting disengagement of the teeth. If the tooth load exceeds normally calculable values, such as may occur upon a pump rack seizure, tooth disengagement is prevented up to the point of outright tooth failure.

The compliant linkage avoids the need for the tight control of centerline distance between pinion and rack, permitting the motor and mechanism load to be mounted in separate housings.

The rod portion 64 of the rack member extends longitudinally into a longitudinal hole 80 in the distal end 90 of the clevis member 56. A press-fit pin 82 extends transversely through the proximal end 84 of the rod portion 64, and extends past the diameter of the rod portion 64 into a longitudinally elongated transverse slot 86 in the midsection of the clevis member 56.

The rod portion 64 is not fully inserted into the hole 80 in the clevis portion 56. Rather, a section 88 of the rod portion 64 extends across a gap between the proximal end 62 of the rectangular portion 66 and the distal end 90 of the clevis member 56.

The spring 54 is a compression-type spring and is disposed in a partially preloaded (precompressed) state about the section 88 of the rod portion (in practice, prior to insertion of the pin 82) to exert a separating force between the rack member 52 and the clevis member 56. The necessity for the preloaded spring 54 is now discussed.

The linkage 52,54,56 avoids impact loads normally experienced with mechanisms driven by stepper motors, especially since in this context the stepper motor 40 has a characteristic motion which combines a high rotational rate of acceleration with oscillation (during operation) which could otherwise be damaging to a mechanism with backlash.

## ELECTROMAGNETIC ACTUATOR

Stepper motors offer a number of advantages over alternative motion control actuators such as solenoids, voice coil, and D.C. servo motors. Excellent static and dynamic accuracy is maintained over the life of the system, sometimes without the need for closed-loop control by means of a position feedback sensor (although position feedback for closed-loop control may certainly be used).

In an open-loop system a micro-computer based controller keeps track of the stepper motor commanded (desired) position, and sequences the stepper motor phase excitation necessary to move to a new location at a given step rate.

In order to maintain the validity of the system, the physical incremental motion of the stepper motor rotor must keep phase with the commanded electrical phase excitation. This is not possible if the load on the motor exceeds its torque. For instance, in the case of a diesel engine jerk pump such as the pump 18, fuel is compressed by the cam-driven plungers 20 and movement of the pump rack 32A during a plunger pumping stroke can result in high transient loads. These transient loads are of significant duration during low engine speeds as encountered during engine starting.

This problem is overcome by providing the previously described compliant linkage 52, 54, 56 between the pinion gear 48 and the pump rack 32A. A torque margin is maintained between the stepper motor output and the load resistance. In the case of transient peak loads, the compliant linkage can yield longitudinally to avoid the transmission of these loads to the stepper motor. More specifically, the precompression of the spring 54 exceeds the normal operating load, but is less than the stepper motor output force (torque), so that the stepper motor can operate in phase during transient peak loads - full system accuracy being restored as the transient load reduces to normal and the spring 54 expands to its preload position.

The preloaded, compliant linkage 52, 54, 56 enables a smaller lighter, and lower cost stepper motor to be used for a given load, without compromising any of the advantages gained by using a stepper motor for the electromagnetic actuator.

In Fig. 2, the stepper motor 40 is illustrated in its closed position, with the distal end 96 of the rack portion 52 resting against a stop 98 in the housing 42. This position is assured by a spring 99 which exerts a distally-directed force on the rack member 52 via the pump rack 32A. Moving the rack member 52 against the stop 98 to reference position, as taught in the aforementioned US-A 4 502 537 is useful, but has some inherent limitations in the context of open-loop stepper motor control. If the stepper motor is always started on one particular coil excitation, it may not be on the correct excitation phase unless a suitable adjustment technique is provided to implement this function. In other words, the stop position may not equal "zero" steps for the chosen coil excitation, it may be plus or minus n steps away (n being the number of steps in 360° of stepper motor rotation divided by the number of excitation coils in the stepper motor).

Thus, it is advantageous to locate a rack member position sensor 100, such as a Hall effect sensor, at a predetermined reference position slightly away from the stop 98 (in the proximal direction) to sense a corresponding reference position for the rack member. This reference position is stored in the controller.

The reference position is located a distance corresponding to at least one-quarter of the repeating stepper motor excitation coil sequence away from the stop 98. (The stepper motor excitation coils are excited sequentially in a repeating pattern.) A sufficient number of step pulses are provided by the controller 28 to the stepper motor to insure positional correspondence between the software (step count from the stored reference position in the controller 28) and the hardware (position of the rack member 52).

This technique compensates for occasional phase shifts between the actual and the desired stepper motor position. Thus, accurate positioning of the pump rack 32 can be achieved by the described combination of a stepper motor, compliant linkage, and reference position sensor without the need for continuously sensing pump rack position for feedback (closed-loop) control.

With the system described herein, pump rack position, and hence end of injection, is readily made dependent on a number of engine operating parameters, in a manner similar to the dependence of cam timing on these parameters; i.e., by development and implementation of suitable control algorithms in the controller 28.

## Claims

1. A fuel injection pump (18) for an engine (12), comprising:
positionable plunger means (20) for metering fuel to the cylinder(s) of the engine (12);
positionable pump rack means (32A) connected to the plunger means (20) for positioning the plunger means (20) and for regulating the metering of fuel to the cylinder(s);
a stepper motor (40) having an output shaft (46) connected via a compliant linkage to the pump rack means (32A) for positioning the pump rack means (32A) in response to an engine operating parameter, wherein the compliant linkage is preloaded in excess of the normal resistive load of the pump rack means (32A) and less than the output force of the stepper motor (40), and a pinion gear (48) disposed on the output shaft (46); and
the compliant linkage comprises:
a rack member (52) having a rectangular portion (62) provided on one side thereof with teeth (70) in meshing engagement with teeth (50) of the pinion gear (48) for longitudinal positioning of the rack member (52) and a rod portion (64) extending longitudinally from the proximal end (66) of the rectangular portion (62);
a connecting member (56) fixed at its proximal end (92) to the pump rack means (32A) and receiving in a longitudinal hole (80) in its distal end (90) the proximal end (84) of the rod portion (64); and
a preload spring (54) exerting a separating force between the rack member (52) and the pump rack means (32A), characterized by said connecting member (56) being a clevis member (56) and said preload spring (54) being disposed between the proximal end (66) of the rectangular portion (62) and the distal end (90) of the clevis member (56), and by a spring-loaded mechanism (76) exerting a force against the opposite side (72) of the rectangular portion (52) to urge the teeth (70) of the rack member against the teeth (50) of the pinion gear (48).

2. A fuel injection pump (18) according to claim 1, characterized in that:
a pin (82) extends transversely through the proximal end (84) of the rod portion (4) and into a longitudinally extended transverse slot (86) in the midsection of the clevis member (56).

3. A fuel injection pump according to claim 2, characterized in that the spring (54) is retained in precompression by the pin (82) and the slot (86).

4. A fuel injection pump according to claim 1, characterized in that:
the opposite side (72) of the rectangular portion (62) has a longitudinal groove (74); and
the spring-loaded means (76) includes a spring (79) acting upon a wheel (78) that rides in the longitudinal groove (74).

5. A fuel injection pump according to claim 1, characterized in that:
the force exerted on the rack member (52) by the spring-loaded means (76) is a function of the maximum force exerted by the pinion teeth (50) in driving the rack member teeth (70) under load.

6. A fuel injection pump according to claim 1, characterized in that:
the clevis member (56) is connected to the pump rack means (32) by a pin (93) disposed parallel to the output shaft (46) to allow movement of the rack member (52) against the pinion gear (48) in response to the force of the spring-loaded mechanism (76).

**Patentansprüche**

1. Kraftstoffeinspritzpumpe (18) für einen Verbrennungsmotor (12), mit:
einer positionierbaren Kolbeneinrichtung (20), mittels welcher dem Zylinder oder den Zylindern des Verbrennungsmotors (12) Kraftstoff zugemessen wird;
einer positionierbaren Pumpenzahnstangeneinrichtung (32A), die mit der Kolbeneinrichtung (20) verbunden ist, zum Positionieren der Kolbeneinrichtung (20) und zum Regulieren der Zumessung von Kraftstoff zu dem Zylinder oder den Zylindern;
einem Schrittmotor (40), der eine Abtriebswelle (46) hat, die über ein nachgiebiges Gestänge mit der Pumpenzahnstangeneinrichtung (32A) verbunden ist, zum Positionieren der Pumpenzahnstangeneinrichtung (32A) aufgrund eines Verbrennungsmotorbetriebsparameters, wobei das nachgiebige Gestänge um mehr als die normale Widerstandsbelastung der Pumpenzahnstangeneinrichtung (32A) und um weniger als die Abtriebskraft des Schrittmotors (40) vorbelastet ist, und einem Ritzel (48), das auf der Abtriebswelle (46) angeordnet ist; und
wobei das nachgiebige Gestänge aufweist:
eine Zahnstange (52), die einen rechteckigen Teil (62) hat, der auf einer Seite mit Zähnen (70) versehen ist, die mit den Zähnen (50) des Ritzels (48) kämmen, zum Längspositionieren der Zahnstange (52), und einen Stangenteil (64), der sich in Längsrichtung von dem proximalen Ende (66) des rechteckigen Teils (62) aus erstreckt;
ein Verbindungsteil (56), das an seinem proximalen Ende (92) an der Pumpenzahnstangeneinrichtung (32A) befestigt ist und in einem Längsloch (80) in seinem distalen Ende (90) das proximale Ende (84) des Stangenteils (64) aufnimmt; und eine Vorbelastungsfeder (54), die eine Trennkraft zwischen der Zahnstange (52) und der Pumpenzahnstangeneinrichtung (32A) ausübt, dadurch gekennzeichnet, daß das Verbindungsteil (56) ein Gabelkopf (56) ist und die Vorbelastungsfeder (54) zwischen dem proximalen Ende (66) des rechteckigen Teils (62) und dem distalen Ende (90) des Gabelkopfes (56) angeordnet ist, und daß eine federbelastete Einrichtung (76) vorgesehen ist zum Ausüben einer Kraft auf die entgegengesetzte Seite (72) des rechteckigen Teils (52), um die Zähne (70) der Zahnstange gegen die Zähne (50) des Ritzels (48) zu drängen.

2. Kraftstoffeinspritzpumpe (18) nach Anspruch 1, dadurch gekennzeichnet, daß:
sich ein Stift (82) quer durch das proximale Ende (84) des Stangenteils (4) und in einen in Längsrichtung ausgedehnten Querschlitz (86) in dem Mittelabschnitt des Gabelkopfes (56) erstreckt.

3. Kraftstoffeinspritzpumpe nach Anspruch 2, dadurch gekennzeichnet, daß die Feder (54) durch den Stift (82) und den Schlitz (86) unter Vordruckspannung gehalten wird.

4. Kraftstoffeinspritzpumpe nach Anspruch 1, dadurch gekennzeichnet, daß:
die entgegengesetzte Seite (72) des rechteckigen Teils (62) eine Längsnut (74) hat; und
die federbelastete Einrichtung (76) eine Feder (79) aufweist, die auf ein Rad (78) einwirkt, das in der Längsnut (74) läuft.

5. Kraftstoffeinspritzpumpe nach Anspruch 1, dadurch gekennzeichnet, daß:
die Kraft, die durch die federbelastete Einrichtung (76) auf die Zahnstange (52) ausgeübt wird, eine Funktion der maximalen Kraft ist, welche durch die Ritzelzähne (50) beim Antreiben der Zahnstangenzähne (70) unter Last ausgeübt wird.

6. Kraftstoffeinspritzpumpe nach Anspruch 1, dadurch gekennzeichnet, daß:
der Gabelkopf (56) mit der Pumpenzahnstangeneinrichtung (32) durch einen Stift (93) verbunden ist, der parallel zu der Abtriebswelle (46) angeordnet ist, um eine Bewegung der Zahnstange (52) gegen das Ritzel (48) aufgrund der Kraft der federbelasteten Einrichtung (76) zu gestatten.

**Revendications**

1. Pompe (18) d'injection de carburant pour un moteur (12), comprenant:
des moyens de pistons (20) positionnables pour mesurer le carburant au(x) cylindre(s) du moteur (12);
des moyens de crémaillère (32A) de pompe positionnables reliés aux moyens de pistons (20) pour positionner les moyens de pistons (20) et pour réguler la mesure du carburant au(x) cylindre(s);
un moteur pas-à-pas (40) ayant un arbre de sortie (46) relié, via un accouplement élastique, aux moyens de crémaillère (32A) de la pompe pour le positionnement des moyens de crémaillère (32A) de la pompe en réponse à un paramètre de fonctionnement du moteur, dans lequel l'accouplement élastique est préchargé en excès de la charge résistive normale des moyens de crémaillère (32A) de la pompe et en-dessous de la force de sortie du moteur pas-à-pas (40), et
un pignon (48) disposé sur l'arbre de sortie (46); et
l'accouplement élastique comprend:
une crémaillère (52) ayant une partie rectangulaire (62) présentant sur un côté des dents (70) s'engrenant avec les dents (50) du pignon (48) pour un positionnement longitudinal de la crémaillère (52) et une tige (64) s'étendant longitudinalement de l'extrémité proximale (66) à partir de la partie rectangulaire (62), un élément de raccord (56) fixé par son extrémité proximale (92) aux moyens de crémaillère (32A) de la pompe et recevant, dans un perçage longitudinal (80) ménagé dans son extrémité distale (90), l'extrémité proximale (84) de la tige (64); et

un ressort préchargé (54) exerçant une force de séparation entre la crémaillère (52) et les moyens de crémaillère (32A) de pompe, caractérisée en ce que ledit élément de raccord (56) est un étrier (56) et ledit ressort préchargé (54) est disposé entre l'extrémité proximale (66) de la partie rectangulaire (62) et l'extrémité distale (90) de l'étrier (56), et en ce qu'un mécanisme (76) chargé par ressort exerce une force contre le côté opposé (72) de la partie rectangulaire (52) pour forcer les dents (70) de la crémaillère contre les dents (50) du pignon (48).

2. Pompe (18) d'injection de carburant selon la revendication 1, caractérisée en ce qu'une broche (82) traverse transversalement l'extrémité proximale (84) de la tige (64) puis une fente transversale allongée (86) à mi-section de l'étrier (56).

3. Pompe (18) d'injection de carburant selon la revendication 2, caractérisée en ce que le ressort (54) est retenu en précompression par la broche (82) et la fente (86).

4. Pompe (18) d'injection de carburant selon la revendication 1, caractérisée en ce que le côté opposé (72) de la partie rectangulaire (62) possède une rainure longitudinale (74) et les moyens (76) chargés par ressort comprennent un ressort (79) agissant sur une roue (78) qui court dans la rainure longitudinale (74).

5. Pompe (18) d'injection de carburant selon la revendication 1, caractérisée en ce que la force exercée sur la crémaillère (52) par les moyens (76) chargés par ressort est fonction de la force maximum exercée par les dents (50) du pignon lors de l'entraînement des dents (70) de la crémaillère sous charge.

6. Pompe (18) d'injection de carburant selon la revendication 1, caractérisée en ce que l'étrier (56) est associé aux moyens de crémaillère (32) de la pompe par une broche (93) disposée parallèlement à l'arbre de sortie (46) pour autoriser le mouvement de la crémaillère (52) contre le pignon (48) en réponse à la force du mécanisme (76) chargé par ressort.

FIG. I PRIOR ART

EP 0 239 523 B1

EP 0 239 523 B1

FIG. 2